(19) **Europäisches Patentamt**

**European Patent Office**

**Office européen des brevets**

(11) Publication number: **0 257 712 B1**

(12) # EUROPEAN PATENT SPECIFICATION

(45) Date of publication of patent specification:
02.05.91 Bulletin 91/18

(51) Int. Cl.$^5$: **D06F 58/10, D06F 58/26**

(21) Application number: **87201576.3**

(22) Date of filing: **20.08.87**

(54) A drying device.

(30) Priority: **27.08.86 NL 8602180**

(43) Date of publication of application:
**02.03.88 Bulletin 88/09**

(45) Publication of the grant of the patent:
**02.05.91 Bulletin 91/18**

(84) Designated Contracting States:
**BE DE GB NL**

(56) References cited:
**AU-A- 51 629**
**DE-A- 2 115 222**
**FR-A- 922 359**
**FR-A- 983 433**

(56) References cited:
**FR-A- 1 517 912**
**FR-A- 1 576 511**
**FR-A- 2 490 796**
**FR-A- 2 568 678**
**GB-A- 518 360**
**US-A- 4 514 914**

(73) Proprietor: **van Heel, Joannes Marie**
**Kreitenborg 17**
**NL-4761 ST Zevenbergen (NL)**

(72) Inventor: **van Heel, Joannes Marie**
**Kreitenborg 17**
**NL-4761 ST Zevenbergen (NL)**

(74) Representative: **Ottevangers, Sietse Ulbe et al**
**Vereenigde Octrooibureaux Postbus 87930**
**NL-2508 DH Den Haag (NL)**

EP 0 257 712 B1

Jouve, 18, rue Saint-Denis, 75001 PARIS

## Description

This invention relates to a drying device for drying laundry, clothing and the like by means of a solar collector, with a housing having a space therein, in which space, if desired, racks or the like means for the articles to be dried are arranged, and with a solar collector, comprising at least a glass plate and an absorber plate, means being provided for enabling an air flow through the said space.

Such device is known from FR-A-2 568 678. This known drying device is provided with two cases, each comprising at least one pane of glass on which solar radiation can impinge. The solar collector of the known device, consisting of a glass pane and an absorber plate or layer, is incorporated in one of the two cases, whereas the space for the articles to be dried is comprised in the other of the two cases. The cases are such that they are in open connection with each other, so that an air flow through the case comprising the solar collector is heated in that case and will reach the case with the drying space.

The drying device according to the invention is different in that the solar collector is received in at least part of one of the walls of the housing bounding the said space. Thus the device according to the invention is provided with only one case, one wall of which is, at least for a major part, used as collector. By such construction solar rays incident on the collector may be emitted substantially in the form of heat directly and/or indirectly in the drying space.

The device according to the invention may be arranged fixedly, e.g. on the flat roof of a building, or be removable. A removable device according to the invention may be provided with (swiveling) wheels, rollers or the like for an easy displacement.

In a suitable embodiment of the device according to the invention, the air flow enabling means comprise suitable openings in the bottom and a part of the walls and/or the top surface of the device. Preferably the dimensions of the openings are adjustable. In the device according to the invention there may be further provided in two opposed walls of the device, slotted openings adjacent the top of, or above the solar collector, said slots having the form of closable louvered gratings.

In a different suitable embodiment of the device according to the present invention the wall wherein the solar collector is received is designed as a double wall in such a manner that between the solar rays and the wall portion adjoining the drying space, there is present a channel or a system of channels communicating on the one end with the outside air and on the other end continuing in the suitably constructed bottom of the device, suitable openings being provided in an open connection between channel or system of channels and drying space.

Preferably, furthermore the racks or similar means for the article to be dried are arranged in extensible or unrollable fashion in the device, which is especially advantageous in a stationary device.

The solar collector forming part of one of the walls of the device according to the present invention is preferably slightly inclined, so not arranged entirely vertical, in order to use the incident radiation as effectively as possible. The solar collector comprises an absorber provided e.g. with a spectral-selective layer so that there is little outward radiation. The back of the absorber facing towards the interior of the device is preferably black, so that a substantial heat radiation towards the interior is achieved.

Some embodiments of the device according to the present invention will now be described, by way of example, with reference to the accompanying drawings, in which :

Fig. 1 is a diagrammatic cross-sectional view of an embodiment of the device according to the present invention, and

Fig. 2 is a similar view of a different embodiment.

In the figures, similar or comparable parts are indicated with identical reference numerals.

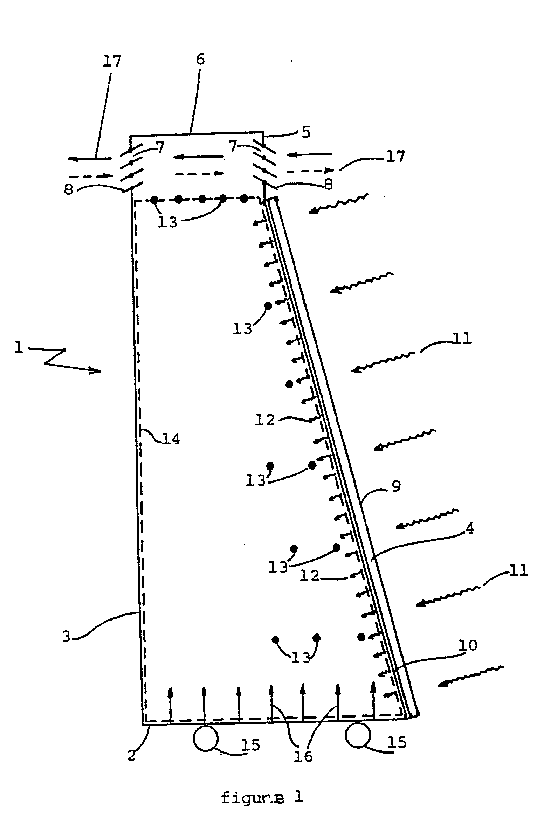

In Fig. 1 the device 1 comprises a bottom 2 on which the rear wall 3 extends perpendicularly. Slightly sloping at the opposite side there is arranged the collector 4 forming the front wall of the "box". Collector 4 does not extend entirely up to the top of the box. The upper part of the front wall formed substantially by collector 4 is a vertical wall portion 5. Rear wall 3 and wall portion 5 are interconnected by the top plate 6.

Wall portion 5 and the opposite upper portion of rear wall 3 are provided with slotted openings 7 oriented perpendicularly to the plane of drawing. Openings 7 are provided with louvered gratings 8, which are adjustable so that the dimension of openings 7 is adjustable therewith.

Collector 4 comprises a glass plate 9 at the exterior of the device 1. At some interspace from said plate towards the interior there is arranged the absorber plate 10, which, at the side of glass plate 9, is provided with a spectral-selective layer. At the side facing towards the interior of box 1, absorber 10 is provided with a black layer.

In operation, solar radiation, shown by wavy arrows 11, impinges upon absorber 10 through glass plate 9. The solar radiation 11 captured by a absorber 10 is irradiated in the form of heat through the black layer to the interior of box 1, which is shown by the small wavy arrows 12.

Box 1 accommodates a drying rack, which comprises e.g. a plurality of rods 13 oriented transversely to the plane of drawing. Rods 13 can be disposed fixedly in the vertical side walls connecting the rear wall 3 and collector 4, in which case laundry, clothing or the like to be dried can be hung out on the rods e.g. via doors (not shown) in rear wall 3. Rods 13, however, may also form part of a separate construction, shown in the drawing by broken line 14. Such a separate rack 14 is arranged in its entirety in box 1 via doors (not shown) in rear wall 3 or one of the side walls. The advantage of such a detachable rack is that it can be loaded already elsewhere with the article to be dried, which is particularly useful when box 1 itself is arranged fixedly.

Fig. 1 shows a mobile box 1. Underneath bottom 2 there are mounted suitably wheels 15, which may be swiveling wheels.

Openings are furthermore provided in bottom 2. The bottom plate may be a grating plate to that effect. Through said openings, which may be closable, an air flow can extend upwards through box 1, as shown by arrows 16. Thus, water vapour released from the article to be dried by the heat emitted by collector 4 is discharged from box 1, which is promoted by the cross flow at the top of the box indicated by arrows 17.

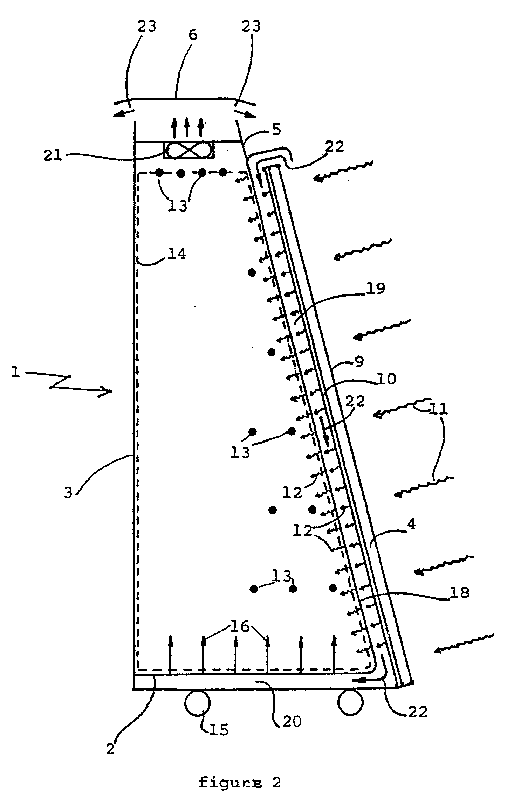

The embodiment of device 1 shown in Fig. 2 also comprises a bottom 2 having a rear wall 3 perpendicular thereto. The front wall opposite rear wall 3 is so to say a double wall. At the side of the drying space, said double wall comprises a wall portion 18 bounding the drying space. At the exterior, the double wall comprises a collector 4, which, again, may consist of an absorber 10 having e.g. a spectral-selective layer and a glass plate 9 slightly spaced in front thereof.

Between wall portion 18 and collector 4 there is provided a channel or system of channels 19 terminating in the outside air at the top of collector 4.

Wall portion 19, beyond collector 4, continues upwards as wall 5. Rear wall 3 and wall portion 5 are interconnected by bottom plate 6.

The channel or channel system 19 is connected at the bottom to a channel or channel system 20 extending through bottom 2.

The side of bottom 2 facing towards the drying space contains openings, so that air supplied through the channels can reach the drying space, as shown by arrows 16.

In top of the device 1, above the removable drying rack 14 with rods 13, there is arranged a fan 21 by means of which air is transported through the device. This air is then drawn in by the channel system 19, 20, as shown by arrows 22, and is heated in channel system 19 by heat being irradiated from collector 4. In top of the device, the drawn in and heated air is blown off through suitable openings 23 in wall portions 3, 5.

The device according to the present invention can be designed in different dimensions. A very useful box according to the present invention for instance has a height of about 1.5 m, a width (from side wall to side wall) of about 1.25 m and a largest depth (from collector to rear wall) of about 0.75 m.

Different variants of the device according to the present invention are possible. For instance, the absorber of the collector may be coupled to a system of conduits or reservoirs containing water or the like for the storage of heat.

The advantage of the device according to the present invention over known drying drums is that no or practically no energy is used for operating the device, that the article to be dried is not subjected to wear and that the device requires hardly any maintenance, while the chance of failures is minimal.

The advantage of the device according to the present invention over the traditional drying on the clothes line is a significantly shorter drying time and a weather-independent operation.

## Claims

1. A drying device (1) for drying laundry, clothing and the like by means of a solar collector (4), with a housing having a space therein, in which space, if desired, racks (13) or the like means for the articles to be dried are arranged, and with a solar collector (4), comprising at least a glass plate (9) and an absorber plate (10), means being provided for enabling an air flow (16, 22) through the said space, characterized in that the solar collector (4) is received in at least part of one of the walls of the housing bounding the said space.

2. A device according to claim 1, characterized in that the air flow enabling means comprise suitable openings (7) in the bottom (2) and a part of the walls (3, 5) and/or the top surface (6) of the device.

3. A device according to claim 2, characterized in that the dimensions of the openings (7) are adjustable.

4. A device according to claims 1-3, characterized in that two opposed walls (3, 5) of the device contain slotted openings (7) adjacent the top of, or above the solar collector (4), said slots having the form of closable louvered gratings (8).

5. A device according to claim 1, characterized in that the wall receiving the solar collector (4) is designed as a double wall so that between the solar collector (4) and the wall portion adjoining the drying space there is present a channel (19) or channel system communicating on the one end with the outside air and on the other end continuing (20) in the suitably constructed bottom (2) of the device, suitable openings being provided in an open connection between channel or channel system (19, 20) and drying space.

## Ansprüche

1. Trockenvorrichtung (1) für Wäsche, Kleider oder ähnliches mit Hilfe eines Solarkollektors (4), mit einem Gehäuse, in dessen Innenraum Stangen (13) oder ähnliches zur Anordnung der zu trocknenden Gegenstände angeordnet werden können, und mit einem Solarkollektor (4), der zumindest eine Glasplatte (9) und eine Absorberplatte (10) beinhaltet, so angeordnet, daß ein Luftstrom (16, 22) durch den Innenraum strömen kann, dadurch gekennzeichnet, daß der Solarkollektor (4) zumindest von einem Teil einer der Wandungen des Gehäuses aufgenommen ist, die den Innenraum begrenzen.

2. Vorrichtung nach Anspruch 1, dadurch gekennzeichnet, daß die Einrichtungen zur Erzeugung des Luftstroms geeignete Öffnungen (7) in der Bodenfläche (2) und einem Teil der Wandungen (3, 5) und/oder der Oberseite (6) der Vorrichtung beinhalten.

3. Vorrichtung nach Anspruch 2, dadurch gekennzeichnet, daß die Abmessungen der Öffnungen (7) veränderbar sind.

4. Vorrichtung nach Anspruch 1 bis 3, dadurch gekennzeichnet, daß zwei gegenüberliegende Wandungen (3, 5) der Vorrichtung schlitzartige Öffnungen (7) aufweisen, die gegenüber dem oberen Ende oder oberhalb des Solarkollektors (4) angeordnet sind und die als verschließbare Jalousiegitter (8) ausgebildet sind.

5. Vorrichtung nach Anspruch 1, dadurch gekennzeichnet, daß die Wandung, die den Solarkollektor (4) aufnimmt, als Doppelwand aufgebaut ist, so daß zwischen dem Solarkollektor (4) und dem Wandabschnitt, der den Trockenraum begrenzt, ein Kanal (19) oder ein Kanalsystem gebildet ist, der/das auf einer Seite mit der Außenluft in Verbindung steht und auf der anderen Seite in dem entsprechend gestalteten Boden (2) der Vorrichtung endet (20), wobei entsprechende Öffnungen zwischen diesem Kanal oder Kanalsystem (19, 20) und dem Trocknungsraum vorgesehen sind.

## Revendications

1. Un dispositif de séchage (1) pour sécher le linge, les vêtements et autres par le biais d'un capteur solaire (4), muni d'un logement dans l'espace duquel des rayonnages (13) ou autres équipements similaires peuvent être installés si nécessaire pour disposer les articles à sécher, et muni d'un capteur solaire (4), comprenant au moins une plaque de verre (9) et un panneau absorbant (10), un système devant permettre une circulation d'air (16, 22) dans ledit espace, caractérisé par le fait que le capteur solaire (4) est encastré dans au moins une partie des parois du logement délimitant ledit espace.

2. Un dispositif conforme à la revendication 1, caractérisé par le fait que le système permettant la circulation d'air comprend des ouvertures adéquates (7) dans le fond (2) et dans une partie des parois (3, 5) et/ou dans la surface supérieure (6) du dispositif.

3. Un dispositif conforme à la revendication 2, caractérisé par le fait que les dimensions des ouvertures (7) sont réglables.

4. Un dispositif conforme aux revendications 1-3, caractérisé par le fait que deux parois opposées (3, 5) du dispositif contiennent des fentes d'ouverture (7) proches du dessus, ou au dessus du capteur solaire (4), lesdites fentes ayant la forme de dispositifs à claire-voie pouvant être fermés (8).

5. Un dispositif conforme à la revendication 1, caractérisé par le fait que la paroi dans laquelle est encastré le capteur solaire (4) est conçu comme une double paroi, de telle sorte qu'entre le capteur solaire (4) et la portion de paroi attenante à l'espace de séchage se trouve un canal (19) ou un système de canal communiquant avec l'air extérieur à une extrémité, et continuant dans le fond (2) du dispositif prévu à cet effet de l'autre extrémité, des ouvertures appropriées étant prévues dans une connexion ouverte entre le canal ou le système de canal (19, 20) et l'espace de séchage.

figure 1

figure 2